# EUROPÄISCHE PATENTSCHRIFT

(11) **EP 1 527 578 B1**
(45) Veröffentlichungstag und Bekanntmachung des Hinweises auf die Patenterteilung: **05.04.2006**
(21) Anmeldenummer: 04706673.3
(22) Anmeldetag: 30.01.2004
(51) Int. Cl.: H04L 12/64

(54) **KOMMUNIKATION IN EINEM DATENNETZ**
COMMUNICATION IN A DATA NETWORK
COMMUNICATION DANS UN RESEAU DE DONNEES

(30) Priorität: 28.02.2003 DE 10308953
(43) Veröffentlichungstag der Anmeldung: 04.05.2005
(73) Patentinhaber: SIEMENS AKTIENGESELLSCHAFT, 80333 München (DE)
(72) Erfinder: FELD, Joachim, 90451 Nürnberg (DE); STEINDL, Günter, 92284 Poppenricht (DE); WEBER, Karl, 90518 Altdorf (DE)
(86) Internationale Anmeldenummer: PCT/EP2004/000893
(87) Internationale Veröffentlichungsnummer: WO 2004/077773

(56) Entgegenhaltungen:
- US-A- 5 771 234
- US-A- 5 935 214

## Beschreibung

Die Erfindung betrifft ein Verfahren und ein System zur Kommunikation in einem Datennetz, insbesondere switched Ethernet, sowie ein Teilnehmergerät in einem solchen Datennetz.

Datennetze ermöglichen die Kommunikation zwischen mehreren Teilnehmern durch die Vernetzung, also Verbindung der einzelnen Teilnehmer untereinander. Kommunikation bedeutet dabei die Übertragung von Daten zwischen den Teilnehmern. Die zu übertragenden Daten werden dabei als Datentelegramme verschickt, d. h. die Daten werden zu Paketen zusammengepackt und in dieser Form über das Datennetz an den entsprechenden Empfänger gesendet. Man spricht deshalb auch von Datenpaketen. Der Begriff "Übertragung von Daten" wird in diesem Dokument völlig synonym zur oben erwähnten Übertragung von Datentelegrammen oder Datenpaketen verwendet. Die Vernetzung selbst wird beispielsweise bei schaltbaren Hochleistungsdatennetzen, insbesondere Ethernet, dadurch gelöst, dass zwischen zwei Teilnehmer jeweils mindestens eine Koppeleinheit geschaltet ist, die mit beiden Teilnehmern verbunden ist. Jede Koppeleinheit kann mit mehr als zwei Teilnehmern verbunden sein. Jeder Teilnehmer ist mit mindestens einer Koppeleinheit, aber nicht direkt mit einem anderen Teilnehmer verbunden. Teilnehmer sind beispielsweise Computer, speicherprogrammierbare Steuerungen (SPS) oder weitere Komponenten, die elektronische Daten mit anderen Komponenten austauschen, insbesondere verarbeiten. Koppeleinheiten sind z. B. sogenannte Switches, Hubs, Bridges, Router u. Ä. Im Gegensatz zu Bussystemen, bei denen jeder Teilnehmer jeden anderen Teilnehmer des Datennetzes direkt über den Datenbus erreichen kann, handelt es sich bei den schaltbaren Datennetzen ausschließlich um Punkt-zu-Punkt-Verbindungen, d. h. ein Teilnehmer kann alle anderen Teilnehmer des schaltbaren Datennetzes nur durch Weiterleitung der zu übertragenden Daten mittels einer oder mehrerer Koppeleinheiten erreichen. Die Datenpakete in einem schaltbaren Datennetz werden auch Frames genannt, da die übertragenen Nutzdaten üblicherweise in einem Rahmen (englisch: Frame) eingekapselt sind, da spezielle Synchronisierungs- und Fehlererkennungs-Bits den Nutzdaten voran- bzw. nachgestellt sind und sie insofern einrahmen.

In verteilten Automatisierungssystemen, beispielsweise im Bereich der Antriebstechnik, müssen bestimmte Daten zu bestimmten Zeiten bei den dafür bestimmten Teilnehmern eintreffen und von den Empfängern verarbeitet werden. Man spricht dabei von echtzeitkritischen Daten bzw. Datenverkehr, da ein nicht rechtzeitiges Eintreffen der Daten am Bestimmungsort zu unerwünschten Resultaten beim Teilnehmer führt.

Von der Internet-Seite http://www.informatik.uni-leipzig.de/ifi/abteilungen/rnvs/lehre/rn2/download/kap09_6.pdf sind Zeit-Multiplex-Verfahren zur Übertragung von Daten über Breitbandnetze bekannt, bei denen Zeitschlitze für verschiedene Übertragungskanäle reserviert werden und Übertragungskanäle zeitlich auf die Teilnehmer aufgeteilt werden. Beim sogenannten synchronen Zeit-Multiplexing (Synchronous Time Division = STD) werden Übertragungsrahmen definiert, welche aus einer bestimmten Anzahl von Zeitschlitzen fester Größe bestehen. Jeder Benutzer erhält einen bestimmten Zeitschlitz (slot) innerhalb des Übertragungsrahmens zugeordnet, während dessen er senden und empfangen kann. Ein Übertragungskanal ist somit identifiziert durch die Position des Zeitschlitzes innerhalb des Übertragungsrahmens.

Aus der US 5 771 234 A ist ein Verfahren zur Kommunikation in einem Datennetz bekannt, bei welchem Zeitabschnitte definiert werden, die sich in einem Grundtakt zyklisch wiederholen.

Der Erfindung liegt die Aufgabe zugrunde, die durch die Übertragung von Telegrammen beanspruchten Kommunikationsressourcen in einem Datennetz zu verringern.

Diese Aufgabe wird durch ein Verfahren zur Kommunikation in einem Datennetz gelöst, bei welchem Verfahren
- Zeitabschnitte definiert werden, welche sich in einem Grundtakt zyklisch wiederholen,
- Telegrammen jeweils eine erste Kennung zugeordnet ist, die dem jeweiligen Telegramm eine Gruppe von n aufeinanderfolgenden Zeitabschnitten zum Übertragen des jeweiligen Telegramms zuweist, wobei sich die Gruppe zyklisch wiederholt,
- den Telegrammen jeweils eine zweite Kennung zugeordnet ist, die dem jeweiligen Telegramm einen m-ten Zeitabschnitt in der Folge der n Zeitabschnitte einer Gruppe zum Übertragen des jeweiligen Telegramms zuweist, wobei 1 ≤ m ≤ n ist und
- die Telegramme in dem jeweils zugewiesenen Zeitabschnitt übertragen werden.

Diese Aufgabe wird durch ein System zur Kommunikation zwischen Teilnehmern in einem Datennetz gelöst, wobei
- die Teilnehmer zur Übertragung von Telegrammen in den Telegrammen jeweils zugewiesenen, sich in einem Grundtakt zyklisch wiederholenden Zeitabschnitten vorgesehen sind,
- den Telegrammen jeweils eine erste Kennung zugeordnet ist, die dem jeweiligen Telegramm eine Gruppe von n aufeinanderfolgenden Zeitabschnitten zum Übertragen des jeweiligen Telegramms zuweist, wobei sich die Gruppe zyklisch wiederholt und
- den Telegrammen jeweils eine zweite Kennung zugeordnet ist, die dem jeweiligen Telegramm einen m-ten Zeitabschnitt in der Folge der n Zeitabschnitte einer Gruppe zum Übertragen des jeweiligen Telegramms zuweist, wobei 1 ≤ m ≤ n ist.

Diese Aufgabe wird durch ein Teilnehmergerät in einem Datennetz gelöst, welches zur Übertragung von Telegrammen in den Telegrammen jeweils zugewiesenen, sich in einem Grundtakt zyklisch wiederholenden Zeitabschnitten vorgesehen ist, wobei den Telegrammen jeweils eine erste Kennung zugeordnet ist, die dem jeweiligen Telegramm eine Gruppe von n äufeinanderfolgenden Zeitabschnitten zum Übertragen des jeweiligen Telegramms zuweist, wobei sich die Gruppe zyklisch wiederholt und wobei den Telegrammen jeweils eine zweite Kennung zugeordnet ist, die dem jeweiligen Telegramm einen m-ten Zeitabschnitt in der Folge der n Zeitabschnitte einer Gruppe zum Übertragen des jeweiligen Telegramms zuweist, wobei 1 ≤ m ≤ n ist.

Die Erfindung beruht auf der Erkenntnis, dass durch die Koordination der Übertragung von Telegrammen zwischen Teilnehmern in einem Datennetz die Einsetzbarkeit einer solchen Kommunikation auch im Echtzeitumfeld ermöglicht wird. In einem üblichen Netzwerk, z. B. mit Zugriffssteuerung auf Basis CSMA/CD (Carrier Sense Multiple Access/ Collision Detection) sind alle Teilnehmer bezüglich des Absendens von Nachrichten gleichberechtigt, d. h. die einzelnen Teilnehmer sind unabhängig voneinander bei der Wahl der Zeitpunkte zum Senden der Nachrichten. Dadurch sind jedoch die Verzögerungen, bis der Sendevorgang tatsächlich abgeschlossen ist, nicht mit einer festen Obergrenze bestimmbar. Dies schränkt die Nutzung eines solchen Netzwerks im Umfeld von deterministischer Kommunikation ein. In einem Netzwerk, in welchem die Teilnehmer statistisch verteilt bezogen auf den Zeitpunkt und den Kommunikationspartner Daten austauschen, würde sich eventuell eine bestimmte Netzwerklast einstellen, welche gut bestimmbar ist. Wenn aber, wie in Echtzeitumgebungen üblich, eine zyklische n:1-Beziehung besteht (d. h. n Teilnehmer senden zyklisch auf einen Teilnehmer), dann kann durch das nicht koordinierte Senden beim Empfänger aufgrund von Schwebungen der n Sendezyklen immer wieder eine nicht beherrschbare Überlast beim Empfangen entstehen. Dies kann zu Telegrammverlusten führen, welche die Qualität der Datenübertragung beeinträchtigen. Wenn die Obergrenze des Empfangsintervalls entsprechend groß (bzw. hoch) ist, dann kann diese Situation beherrscht werden. Damit ist aber immer eine Überdimensionierung der Ressourcen sowohl beim Netzwerk als auch im Empfänger verbunden. Durch die hier vorgeschlagene Koordination der Sendezeitpunkte der Telegramme werden Überlastspitzen beim empfangenden Teilnehmer vermieden. Durch die Verteilung der Sendezeitpunkte über die Zeit kann im empfangenden Teilnehmer eine berechenbare und auch einhaltbare Obergrenze für die Anzahl der zu verarbeitenden Telegramme angegeben werden. Somit steigt die Verfügbarkeit der Kommunikation, da die Wahrscheinlichkeit für einen Telegrammverlust minimiert wird. Die Belastung des Datennetzes wird vorhersagbarer und somit die Einsetzbarkeit der hier vorgeschlagenen Kommunikation, insbesondere im Echtzeitumfeld und der Automatisierungstechnik, verbessert.

Gemäß einer vorteilhaften Ausgestaltung der Erfindung weisen die Telegramme jeweils eine dritte Kennung auf, welche zur Festlegung einer Reihenfolge der innerhalb eines Zeitabschnitts übertragenen Telegramme dient. Die Telegramme bekommen damit jeweils einen eindeutigen Platz in der Folge der Telegramme eines Zeitabschnitts zugewiesen, was zusätzliche Optimierungen in der Koordinierung des Telegrammverkehrs ermöglicht.

Um die Übertragung zeitlich unkritischer Daten, welche beispielsweise keine Kennungen aufweisen, innerhalb des Datennetzes zu ermöglichen, wird gemäß einer weiteren vorteilhaften Ausgestaltung der Erfindung vorgeschlagen, dass innerhalb eines Zeitabschnitts ein erster Bereich zur Übertragung von Echtzeitdaten und ein zweiter Bereich zur Übertragung von sonstigen Daten vorgesehen ist.

Nachfolgend wird die Erfindung anhand der in den Figuren dargestellten Ausführungsbeispiele näher beschrieben und erläutert.

Es zeigen:
- FIG 1: verschiedene Teilnehmer in einem schaltbaren Datennetz,
- FIG 2: Telegramme während eines Übertragungszyklus in einem Datennetz,
- FIG 3: eine Folge von Übertragungszyklen mit zyklisch übertragenen Telegrammen,
- FIG 4: eine Folge von Übertragungszyklen zur Übertragung von Telegrammen mit unterschiedlichen Kennungen,
- FIG 5: ein Datennetz mit kommunizierenden Teilnehmern und
- FIG 6: eine schematische Darstellung der zwischen diesen Teilnehmern ausgetauschten Telegramme.

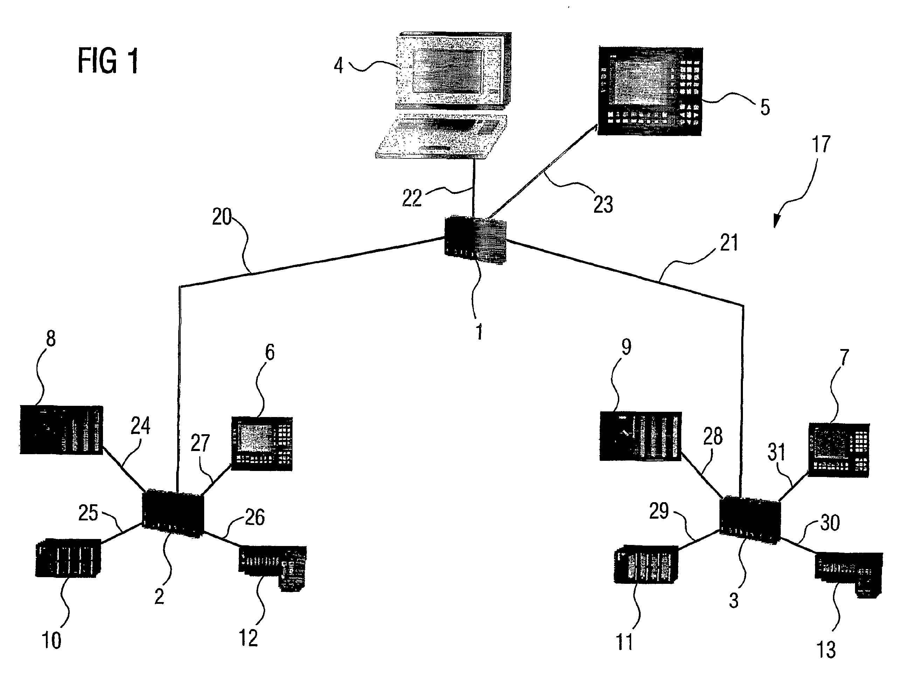

FIG 1 zeigt ein schaltbares Datennetz 17 mit Teilnehmern 1 bis 13. Die Teilnehmer 1 - 13 sind mit Punkt-zu-Punkt-Kommunikationsverbindungen 20 - 31 miteinander gekoppelt. Im in FIG 1 dargestellten Ausführungsbeispiel dient das schaltbare Datennetz 17, z. B. ein switched Ethernet-Netz, zur Kommunikation von Komponenten eines Automatisierungssystems. Die Teilnehmer 4 - 13 im Automatisierungssystem sind über schaltende Koppelelemente 1 - 3 zur Weiterleitung von über die Kommunikationsverbindungen 20 - 30 übertragenen Datenpaketen miteinander gekoppelt. Jeweils mit einer Punkt-zu-Punkt-Verbindung 20 - 30 an die schaltenden Koppelelemente 1 - 3 angebunden sind ein mobiles Programmiergerät 4, ein zentrales Bedien- und Beobachtungssystem 5, dezentrale Bedien- und Beobachtungsstationen 6, 7, speicherprogrammierbare Steuerungen 8, 9, Ein-/Ausgabeeinheiten 10, 11 sowie weitere Peripheriebaugruppen 12, 13. Die Kommunikation zwischen den Teilnehmern 4 - 13 im Automatisierungssystem erfolgt also nicht direkt, z. B. über ein so genanntes Shared-Medium-Netz, sondern im schaltbaren Datennetz 17 jeweils über ein oder mehrere geschaltete Koppelelemente 1 - 3. Die vom Automatisierungssystem zu lösenden komplexen Aufgaben, teilweise mit hohen Anforderungen an die Echtzeitfähigkeit des Systems, verlangen eine deterministische Kommunikation der Teilnehmer 1 - 13 im Automatisierungssystem.

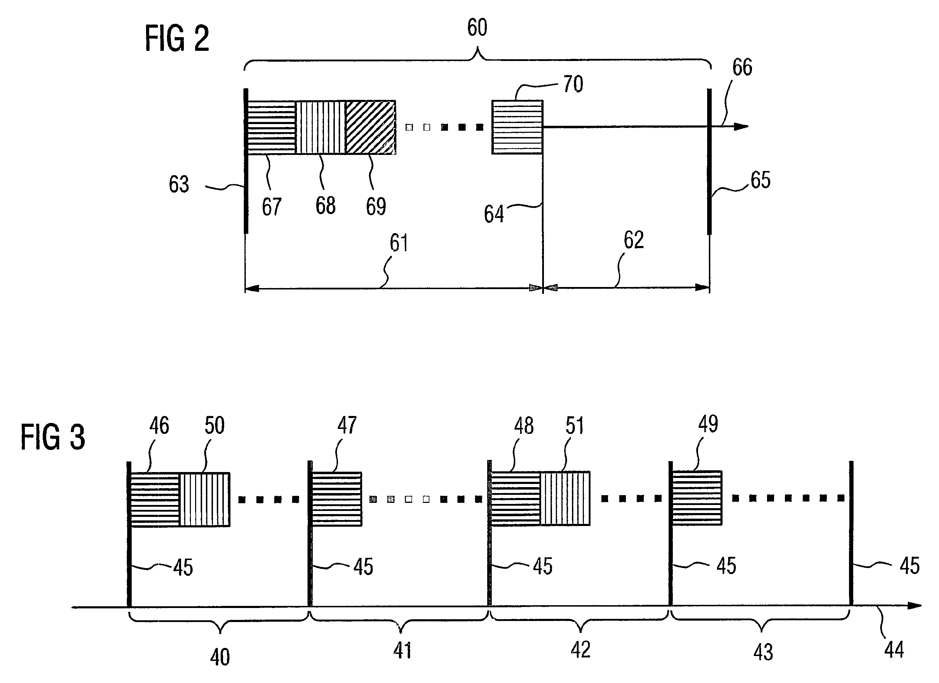

FIG 2 zeigt Telegramme 67 - 70 während eines Übertragungszyklus 60 in einem Datennetz. Die Zeitachse des Diagramms in FIG 2 ist mit dem Bezugszeichen 66 gekennzeichnet. Der Übertragungszyklus 60 weist einen Anfang 63 und ein Ende 65 auf. Der Übertragungszyklus 60 wiederholt sich zyklisch mit einem so genannten Grundtakt. Der Grundtakt des Übertragungszyklus 60 ist im Ausführungsbeispiel ein ganzzahliges Vielfaches von 31,25 µs, hier das 2⁵-fache, d. h. das 32-fache des Basiszeittakts 31,25 µs. Es ergibt sich somit ein Grundtakt von 1 ms. Der Übertragungszyklus, auch Zeitabschnitt genannt, weist einen ersten Bereich 61 zur Übertragung von Echtzeitdaten und einen zweiten Bereich 62 zur Übertragung von sonstigen Daten auf. Die Grenze zwischen den beiden Bereichen 61 und 62 ist mit dem Bezugszeichen 64 gekennzeichnet. Der Übertragungszyklus 60 wird im Ausführungsbeispiel zu 50 % zur Übertragung von Echtzeitdaten und zu weiteren 50 % zur Übertragung von sonstigen Daten genutzt. Dies entspricht einer Bandbreitennutzung der Echtzeitdaten von 50 %. Da im Datennetz 17 nach FIG 1 alle sendenden Teilnehmer 1 - 13 das Versenden von Telegrammen 67 - 70 mit Hilfe einer Sendeliste nach dem vorgeschlagenen Verfahren steuern, muss bei der Betrachtung der benutzten Bandbreite bei empfangenden Teilnehmern 1 - 13 eine Summenbildung über die zu empfangenden Telegramme 67 - 70 erfolgen. Die Telegramme 67 werden zyklisch mit dem Grundtakt von 1 ms übertragen, die Telegramme 68 - 70 werden mit einem ganzzahligen Vielfachen der Periodendauer des Grundtakts, insbesondere zyklisch mit einem Takt, der eine Periodendauer hat, welche sich aus dem Produkt einer Zweierpotenz mit dem Grundtakt ergibt, zyklisch übertragen. Im Beispielsfall werden die Telegramme 68 mit einem Takt von 2 ms, die Telegramme 69 mit einem Takt von 4 ms und schließlich die Telegramme 70 mit einem Takt von 1024 ms übertragen. Die Telegramme 68 werden somit nur in jedem zweiten Übertragungszyklus 60 mit dem Grundtakt von 1 ms übertragen, die Telegramme 69 entsprechend in jedem vierten Übertragungszyklus 60 und die Telegramme 70 in jedem 1024ten Übertragungszyklus 60.

FIG 3 zeigt zur Verdeutlichung des Prinzips der Erfindung eine Folge von Übertragungszyklen 40 - 43 mit zyklisch übertragenen Telegrammen 46 - 51. Teilnehmer in einem Datennetz, z. B. Automatisierungsgeräte in einem Automatisierungssystem, können oder müssen nicht alle mit hoher Performance kommunizieren. Damit nicht der langsamste Teilnehmer die Leistungsfähigkeit des gesamten Datennetzes bestimmt, wird eine so genannte Untersetzung eingeführt. Diese Untersetzung wird als Faktor zum kleinsten Grundtakt definiert. Die Untersetzung bietet die Möglichkeit, bei vielen Teilnehmern die Kommunikationsbeziehungen zu qualifizieren (z. B. in schnelle und langsame Kommunikationsbeziehungen) und erlaubt damit auch bei vielen Teilnehmern hohe Aktualisierungsdaten der Kommunikation zu ausgewählten Kommunikationspartnern. Im Diagramm der FIG 3 ist der Zeitpfeil mit dem Bezugszeichen 44 gekennzeichnet, die Grenzen der Übertragungszyklen 40 - 43 jeweils mit dem Bezugszeichen 45. Jeder der Übertragungszyklen 40 - 43 weist eine Periodendauer von 1 ms auf, d. h. die Übertragungszyklen 40 - 43 folgen im Grundtakt aufeinander. Die Telegramme 46 - 49 werden zyklisch mit diesem Grundtakt von 1 ms aktualisiert. Dahingegen weisen die Telegramme 50, 51 eine Untersetzung mit dem Wert "2", d. h. mit einem Faktor 2 zum kleinsten Grundtakt auf. Die Telegramme 50, 51 werden somit alle 2 ms aktualisiert, hier in den Übertragungszyklen 40 bzw. 42. Jeder Übertragungszyklus 40 - 43 im Grundtakt von 1 ms stellt einen Zeitabschnitt dar. Abhängig von der gewählten Untersetzung stehen ein oder mehrere Zeitabschnitte für die Übertragung von Telegrammen 46 - 51 zur Auswahl. Im Beispiel der FIG 3 stehen genau zwei verschiedene Zeitabschnitte zur Auswahl. Die zu sendenden Telegramme 46 - 51, auch Frames genannt, können zur optimalen Nutzung der Bandbreite auf die einzelnen Zeitabschnitte, d. h. auf die Übertragungszyklen 40 - 43, verteilt werden. Die zyklische Übertragung der Telegramme 50, 51 mit der Untersetzung "2" könnte somit auch in den hier nicht genutzten Zeitabschnitten zyklisch übertragen werden, d. h. in den Übertragungszyklen 41, 43. Existieren mehrere Telegrammtypen mit gleicher Aktualisierungsrate, d. h. gleicher Untersetzung, können diese somit zur besseren Nutzung der Bandbreite auf die Zeitabschnitte verteilt werden.

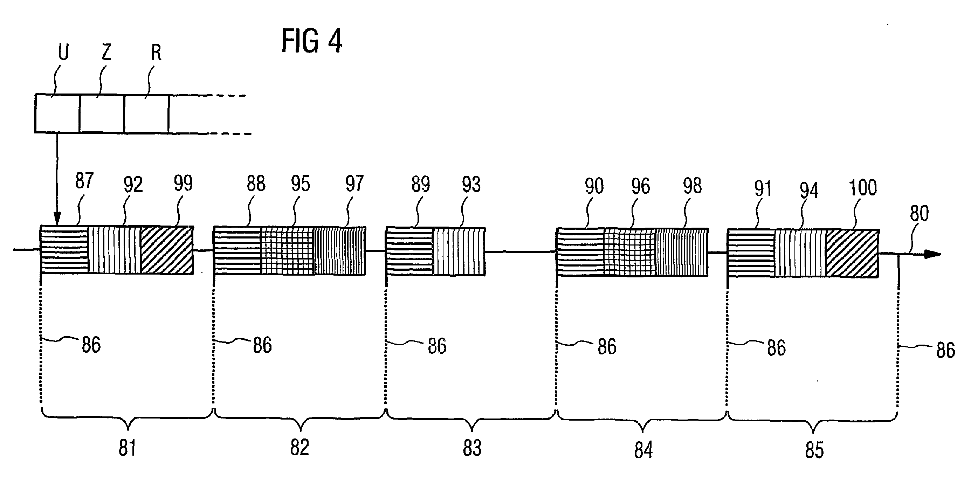

FIG 4 zeigt eine Folge von Übertragungszyklen 81 - 85 zur Übertragung von Telegrammen 87 - 100 mit unterschiedlichen Kennungen. Der Zeitpfeil im Diagramm ist mit dem Bezugszeichen 80 gekennzeichnet, die Grenzen der Übertragungszyklen 81 - 85 sind mit dem Bezugszeichen 86 gekennzeichnet. Nach der Einordnung der zu sendenden Telegramme in Zeitabschnitte sind zusätzliche Optimierungen möglich, wenn zusätzlich die Reihenfolge der Telegramme innerhalb eines Zeitabschnitts vorgegeben wird. Insbesondere wird die Reihenfolge der Telegramme untereinander vorgegeben, denen die selbe Untersetzung zugeordnet ist. In diesem Fall sind die Telegramme mit höherer Aktualisierungsrate, also kleinerer Untersetzung, vorrangig gegenüber Telegrammen mit größerer Untersetzung und werden somit vor diesen übertragen. Im Beispielsfall sendet ein Teilnehmer zu fünf anderen Teilnehmern jeweils zyklisch Telegramme 87 - 100. Der Grundtakt der Übertragungszyklen 81 - 85 hat wiederum eine Periodendauer von 1 ms. Die Untersetzung, der Zeitabschnitt und die Reihenfolge bei der Übertragung der Telegramme 87 - 100 sind für jede der fünf Übertragungsstrecken festgelegt. Für die Übertragungsstrecke, auf welcher Telegramme 87 - 91 zwischen zwei Teilnehmern übertragen werden, ist eine Untersetzung mit dem Wert "1", ein Zeitabschnitt mit dem Wert "1" und eine Reihenfolge mit dem Wert "1" festgelegt. Für die Übertragungsstrecke zu einem weiteren Teilnehmer, auf welcher Telegramme 92 - 94 übertragen werden, ist eine Untersetzung mit dem Wert "2", ein Zeitabschnitt mit dem Wert "1" sowie eine Reihenfolge mit dem Wert "2" festgelegt. Für die Übertragungsstrecke zu einem dritten Teilnehmer, auf welcher Telegramme 95 - 96 übertragen werden, ebenfalls eine Untersetzung mit dem Wert "2", hier allerdings der Zeitabschnitt 2 sowie die Reihenfolge mit dem Wert "1" festgelegt. Auch zur Übertragung der Telegramme 97, 98 zu einem vierten Teilnehmer ist eine Untersetzung mit dem Wert "2" und eine Zeitabschnitt mit dem Wert "2" festgelegt, allerdings ist hier die Reihenfolge auf den Wert "2" festgelegt. Schließlich werden Telegramme 99, 100 zu einem fünften Teilnehmer übertragen. Für diese Übertragungsstrecke wird die Untersetzung 4, ein Zeitabschnitt mit dem Wert "1", sowie eine Reihenfolge mit dem Wert "3" gewählt. Die Untersetzung wird auch als erste Kennung U bezeichnet, der Zeitabschnitt als zweite Kennung Z. Den Telegrammen 87 - 100 ist somit eine erste Kennung U zugeordnet, die Untersetzung, welche dem jeweiligen Telegramm 87 - 100 eine Gruppe von n aufeinander folgenden Zeitabschnitten bzw. Übertragungszyklen 81 - 85 zum Übertragen des jeweiligen Telegramms 87 - 100 zuweist, wobei sich die Gruppe zyklisch wiederholt. Zudem ist den Telegrammen jeweils eine zweite Kennung Z, der Zeitabschnitt, zugeordnet, welcher dem jeweiligen Telegramm 87 - 100 einen m-ten Zeitabschnitt in der Folge der n Zeitabschnitte einer Gruppe zum Übertragen des jeweiligen Telegramms 87 - 100 zuweist, wobei 1 ≤ m ≤ n ist. m und n sind natürliche Zahlen. Zusätzlich ist den Telegrammen 87 - 100 im Ausführungsbeispiel der FIG 4 jeweils eine dritte Kennung R zugeordnet, welche zur Festlegung einer Reihenfolge der innerhalb eines Zeitabschnitts übertragenen Telegramme 87 - 100 dient. Die Kennungen U, Z, R können dabei den Telegrammen 87 - 100 selbst zugeordnet sein (in FIG 4 am Beispiel des Telegramms 87 prinzipiell dargestellt), z. B. als Teil des Telegramminhalts, können aber auch den jeweiligen Übertragungsstrecken zwischen Teilnehmern in einem Datennetz zugeordnet sein. Telegramme, welche über mit entsprechenden Kennungen U, Z, R versehenen Übertragungsstrecken übertragen werden, werden somit in Abhängigkeit dieser Kennungen U, Z, R übertragen. Die hier beschriebene koordinierte Übertragung von Telegrammen 87 - 100, auch als Sendelistensteuerung bezeichnet, führt zu einer gleichmäßigeren Verteilung der Telegramme 87 - 100 auf die einzelnen Zeitabschnitte bzw. Übertragungszyklen 81 -85, und somit zu einer besseren Ausnutzung der zur Verfügung stehenden Bandbreite.

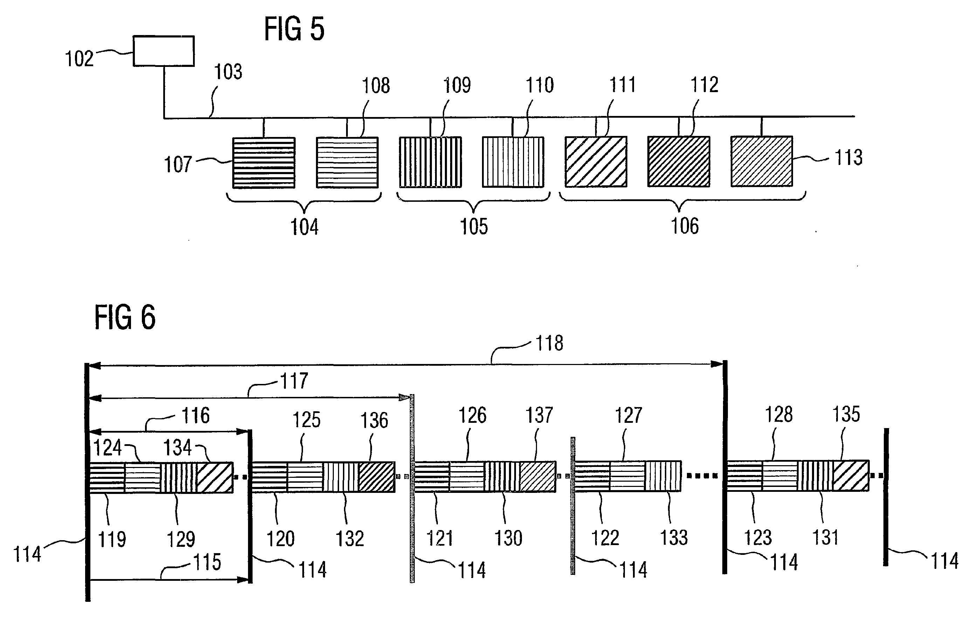

FIG 5 zeigt ein Datennetz 101 mit kommunizierenden Teilnehmern 102, 107 - 113. Dabei sendet der Teilnehmer 102 Telegramme über die Verbindungsstrecken 103 an die weiteren Teilnehmer 107 - 113. Die Verbindungsstrecken 103 sind im Ausführungsbeispiel als geschaltetes Netzwerk ausgebildet. Die Übertragung von Telegrammen zu den Teilnehmern 107 und 108, zusammen mit dem Bezugszeichen 104 bezeichnet, erfolgt im Grundtakt von 1 ms, d. h. mit einer Untersetzung mit dem Wert "1". Die mit dem Bezugszeichen 105 bezeichneten Teilnehmer 109 und 110 erhalten jeweils in einem Zyklus mit einer Periodendauer von 2 ms, d. h. mit einer Untersetzung mit dem Wert "2", Telegramme vom sendenden Teilnehmer 102. Die mit dem Bezugszeichen 106 bezeichnete dritte Gruppe von Teilnehmern 111 - 113 erhält schließlich alle 4 ms Telegramme vom sendenden Teilnehmer 102, d. h. diesen Telegrammen bzw. den Übertragungsstrecken zu den Teilnehmern 111 - 113 ist eine Untersetzung mit dem Wert "4" zugeordnet.

FIG 6 zeigt eine schematische Darstellung der zwischen den in FIG 5 dargestellten Teilnehmern 102 bzw. 107 - 113 ausgetauschten Telegramme 119 - 135. Die jeweiligen Grenzen der Übertragungszyklen sind mit dem Bezugszeichen 114 bezeichnet. Der Grundtakt 115 von 1 ms führt bei einer gewählten Untersetzung mit dem Wert "1" zu der kleinstmöglichen Gruppe von n aufeinander folgenden Zeitabschnitten bzw. Übertragungszyklen, deren Ausdehnung mit dem Bezugszeichen 116 bezeichnet ist. In diesem Fall wäre n = 1. Bei einer gewählten Untersetzung mit dem Wert "2" ergibt sich eine weitere Gruppe von n aufeinander folgenden Zeitabschnitten, deren Ausdehnung mit dem Bezugszeichen 117 bezeichnet ist. In diesem Fall ist der Wert n = 2. Eine dritte Gruppe, gekennzeichnet durch eine Übersetzung mit dem Wert "4" und somit n = 4 aufeinander folgenden Zeitabschnitten ist in ihrer Ausdehnung mit dem Bezugszeichen 118 bezeichnet. Durch die Zuordnung von Kennungen U, Z, R zu den von dem Teilnehmer 102 an die Teilnehmer 107 - 113 gesendeten Telegrammen 119 - 135 ergibt sich für einen beliebig ausgewählten Zeitabschnitt der Kommunikation die in FIG 6 dargestellte Verteilung der Telegramme 119 - 135. Die Telegramme 119 - 123 werden in 1 ms-Zyklus an den Teilnehmer 107 übertragen. Mit der gleichen Wiederholungsrate, d. h. auch mit der Untersetzung mit dem Wert "1", werden die Telegramme 124 - 128 an den Teilnehmer 108 übertragen, allerdings wird diesen Telegrammen 124 - 128 eine dritte Kennung R zugeordnet, welche hier den Wert "2" aufweist. Die zweite Gruppe 105 mit den Teilnehmern 109 bzw. 110 empfängt jeweils alle 2 ms Telegramme 129 - 131 bzw. 132 - 133 vom sendenden Teilnehmer 102. Schließlich wird an die dritte Gruppe 106 mit den Teilnehmern 111, 112 und 113 alle 4 ms Telegramme 134 und 135, 136 bzw. 137 übertragen.

Der Teilnehmer 102 sendet somit zu den sieben weiteren Teilnehmern 107 - 113 jeweils zyklisch Telegramme. Die Untersetzungen U, der Zeitabschnitt Z und die Reihenfolge R sind in Form einer Sendeliste folgendermaßen festgelegt:
Teilnehmer 107: U=1, Z=1, R=1
Teilnehmer 108: U=1, Z=1, R=2
Teilnehmer 109: U=2, Z=1, R=1
Teilnehmer 110: U=2, Z=2, R=1
Teilnehmer 111: U=4, Z=1, R=1
Teilnehmer 112: U=4, Z=2, R=1
Teilnehmer 113: U=4, Z=3, R=1

Auch mit diesem Ausführungsbeispiel der Figuren 5 und 6 ist gut erkennbar, dass das vorgeschlagene Verfahren zur Kommunikation in einem Datennetz zu einer sehr guten zeitlichen Verteilung von Telegrammen 119 - 135 und damit zu einer sehr guten Nutzung der zur Verfügung stehenden Bandbreite führt.

Zusammengefasst betrifft die Erfindung somit ein Verfahren und ein System zur Kommunikation in einem Datennetz 101, insbesondere switched Ethernet, sowie einen Teilnehmer 102 in einem solchen Datennetz 101. Um die durch die Übertragung von Telegrammen 119 - 135 beanspruchten Kommunikationsressourcen in dem Datennetz 101 zu verringern, wird vorgeschlagen, dass Zeitabschnitte definiert werden, welche sich in einem Grundtakt zyklisch wiederholen, dass Telegrammen 119 - 135 jeweils eine erste Kennung U zugeordnet ist, die dem jeweiligen Telegramm 119 - 135 eine Gruppe von n aufeinander folgenden Zeitabschnitten zum Übertragen des jeweiligen Telegramms 119 - 135 zuweist, wobei sich die Gruppe zyklisch wiederholt, dass den Telegrammen jeweils eine zweite Kennung Z zugeordnet ist, die dem jeweiligen Telegramm 119 - 135 einen m-ten Zeitabschnitt in der Folge der n Zeitabschnitte einer Gruppe zum Übertragen des jeweiligen Telegramms 119 - 135 zuweist, wobei 1 ≤ m ≤ n ist und dass die Telegramme 119 - 135 in dem jeweils zugewiesenen Zeitabschnitt übertragen werden.

## Patentansprüche

1. Verfahren zur Kommunikation in einem Datennetz (101), bei welchem Verfahren
• Zeitabschnitte definiert werden, welche sich in einem Grundtakt zyklisch wiederholen,
• Telegrammen (119 - 135) jeweils eine erste Kennung (U) zugeordnet ist, die dem jeweiligen Telegramm eine Gruppe von n aufeinanderfolgenden Zeitabschnitten zum Übertragen des jeweiligen Telegramms zuweist, wobei sich die Gruppe zyklisch wiederholt, **dadurch gekennzeichnet, dass** den Telegrammen (119 - 135) jeweils eine zweite Kennung (Z) zugeordnet ist, die dem jeweiligen Telegramm einen m-ten Zeitabschnitt in der Folge der n Zeitabschnitte einer Gruppe zum Übertragen des jeweiligen Telegramms zuweist,
wobei 1 ≤ m ≤ n ist und
• die Telegramme in dem jeweils zugewiesenen Zeitabschnitt übertragen werden.

2. Verfahren nach Anspruch 1,
**dadurch gekennzeichnet,**
**dass** den Telegrammen (119 - 135) jeweils eine dritte Kennung (R) zugeordnet ist, die zur Festlegung einer Reihenfolge der innerhalb eines Zeitabschnitts zu übertragenden Telegramme dient.

3. Verfahren nach Anspruch 1 oder 2,
**dadurch gekennzeichnet,**
**dass** innerhalb eines Zeitabschnitts ein erster Bereich zur Übertragung von Echtzeitdaten und ein zweiter Bereich zur Übertragung von sonstigen Daten vorgesehen ist.

4. System zur Kommunikation zwischen Teilnehmern (102) in einem Datennetz (101), wobei
• die Teilnehmer (102) zur Übertragung von Telegrammen (119 - 135) in den Telegrammen (119 - 135) jeweils zugeordneten, sich in einem Grundtakt zyklisch wiederholenden Zeitabschnitten vorgesehen sind,
• den Telegrammen (119 - 135) jeweils eine erste Kennung (U) zugeordnet ist, die dem jeweiligen Telegramm eine Gruppe von n aufeinanderfolgenden Zeitabschnitten zum Übertragen des jeweiligen Telegramms zuweist, wobei sich die Gruppe zyklisch wiederholt und **dadurch gekennzeichnet, dass** den Telegrammen (119 - 135) jeweils eine zweite Kennung (Z) zugeordnet ist, die dem jeweiligen Telegramm einen m-ten Zeitabschnitt in der Folge der n Zeitabschnitte einer Gruppe zum Übertragen des jeweiligen Telegramms zuweist,
wobei 1 ≤ m ≤ n ist.

5. System nach Anspruch 4, **dadurch gekennzeichnet, dass** den Telegrammen (119 - 135) jeweils eine dritte Kennung (R) zugeordnet ist, die zur Festlegung einer Reihenfolge der innerhalb eines Zeitabschnitts zu übertragenden Telegramme dient.

6. System nach Anspruch 4 oder 5, **dadurch gekennzeichnet, dass** innerhalb eines Zeitabschnitts ein erster Bereich zur Übertragung von Echtzeitdaten und ein zweiter Bereich zur Übertragung von sonstigen Daten vorgesehen ist.

7. Teilnehmergerät (102), welches zur Übertragung von Telegrammen (119 - 135) in den Telegrammen (119 - 135) jeweils zugewiesenen, sich in einem Grundtakt zyklisch wiederholenden Zeitabschnitten vorgesehen ist, wobei den Telegrammen (119 - 135) jeweils eine erste Kennung (U) zugeordnet ist, die dem jeweiligen Telegramm eine Gruppe von n aufeinanderfolgenden Zeitabschnitten zum Übertragen des jeweiligen Telegramms zuweist, wobei sich die Gruppe zyklisch wiederholt **dadurch gekennzeichnet, dass** den Telegrammen (119 - 135) jeweils eine zweite Kennung (Z) zugeordnet ist, die dem jeweiligen Telegramm einen m-ten Zeitabschnitt in der Folge der n Zeitabschnitte einer Gruppe zum Übertragen des jeweiligen Telegramms zuweist, wobei 1 ≤ m ≤ n ist.

## Claims

1. Method for communication in a data network (101), in which method
• time periods are defined which are cyclically repeated at a basic clock rate,
• telegrams (119-135) respectively have a first associated identifier (U) which assigns the respective telegram a group of n successive time periods for transmitting the respective telegram, the group being cyclically repeated, **characterized in that** the telegrams (119-135) respectively have an associated second identifier (Z) which assigns the respective telegram an m-th time period in the sequence of the n time periods in a group for transmitting the respective telegram, where 1 ≤ m ≤ n, and
• the telegrams are transmitted in the respectively assigned time period.

2. Method according to Claim 1,
**characterized**
**in that** the telegrams (119-135) respectively have an associated third identifier (R) which is used to stipulate an order for the telegrams which are to be transmitted within a time period.

3. Method according to Claim 1 or 2,
**characterized**
**in that** within a time period a first range is provided for transmitting real-time data and a second range is provided for transmitting other data.

4. System for communication between subscribers (102) in a data network (101), where
• the subscribers (102) are provided for transmitting telegrams (119-135) in time periods which are respectively associated with the telegrams (119-135) and which are cyclically repeated at a basic clock rate,
• the telegrams (119-135) respectively have an associated first identifier (U) which assigns the respective telegram a group of n successive time periods for transmitting the respective telegram, the group being cyclically repeated, and **characterized in that** the telegrams (119-135) respectively have an associated second identifier (Z) which assigns the respective telegram an m-th time period in the sequence of the n time periods in a group for transmitting the respective telegram, where 1 ≤ m ≤ n.

5. System according to Claim 4, **characterized in that** the telegrams (119-135) respectively have an associated third identifier (R) which is used to stipulate an order for the telegrams which are to be transmitted within a time period.

6. System according to Claim 4 or 5, **characterized in that** within a time period a first range is provided for transmitting real-time data and a second range is provided for transmitting other data.

7. Subscriber terminal (102) which is provided for transmitting telegrams (119-135) in time periods which are respectively associated with the telegrams (119-135) and which are cyclically repeated at a basic clock rate, where the telegrams (119-135) respectively have an associated first identifier (U) which assigns the respective telegram a group of n successive time periods for transmitting the respective telegram, the group being cyclically repeated, **characterized in that** the telegrams (119-135) respectively have an associated second identifier (Z) which assigns the respective telegram an m-th time period in the sequence of the n time periods in a group for transmitting the respective telegram, where 1 ≤ m ≤ n.

## Revendications

1. Procédé de communication dans un réseau de données (101), procédé dans lequel
• on définit des intervalles de temps qui se répètent de façon cyclique selon une horloge fondamentale,
• il est associé à des télégrammes (119 à 135) à chaque fois un premier identificateur (U) qui attribue au télégramme respectif un groupe de n intervalles de temps consécutifs pour la transmission du télégramme respectif, le groupe se répétant de façon cyclique,
**caractérisé par le fait qu'**il est associé aux télégrammes (119 à 135) à chaque fois un deuxième identificateur (Z) qui attribue au télégramme respectif un m-ème intervalle de temps dans la séquence des n intervalles de temps d'un groupe pour la transmission du télégramme respectif, avec 1 ≤ m ≤ n, et
• on transmet les télégrammes dans l'intervalle de temps respectivement attribué.

2. Procédé selon la revendication 1,
**caractérisé par le fait qu'**il est associé aux télégrammes (119 à 135) à chaque fois un troisième identificateur (R) qui sert à la spécification d'un ordre des télégrammes à transmettre à l'intérieur d'un intervalle de temps.

3. Procédé selon la revendication 1 ou 2,
**caractérisé par le fait que**, à l'intérieur d'un intervalle de temps, il est prévu une première plage pour la transmission de données en temps réel et une deuxième plage pour la transmission d'autres données.

4. Système de communication entre des utilisateurs (102) dans un réseau de données (101), système dans lequel
• les utilisateurs (102) sont prévus pour la transmission de télégrammes (119 à 135) dans des intervalles de temps associés respectivement aux télégrammes (119 à 135) et se répétant de façon cyclique selon une horloge fondamentale,
• il est associé aux télégrammes (119 à 135) à chaque fois un premier identificateur (U) qui attribue au télégramme respectif un groupe de n intervalles de temps consécutifs pour la transmission du télégramme respectif, le groupe se répétant de façon cyclique, et
**caractérisé par le fait qu'**il est associé aux télégrammes (119 à 135) à chaque fois un deuxième identificateur (Z) qui attribue au télégramme respectif un m-ème intervalle de temps dans la séquence des n intervalles de temps d'un groupe pour la transmission du télégramme respectif, avec 1 ≤ m ≤ n.

5. Système selon la revendication 4,
**caractérisé par le fait qu'**il est associé aux télégrammes (119 à 135) à chaque fois un troisième identificateur (R) qui sert à la spécification d'un ordre des télégrammes à transmettre à l'intérieur d'un intervalle de temps.

6. Système selon la revendication 4 ou 5,
**caractérisé par le fait que**, à l'intérieur d'un intervalle de temps, il est prévu une première plage pour la transmission de données en temps réel et une deuxième plage pour la transmission d'autres données.

7. Appareil utilisateur (102), qui est prévu pour la transmission de télégrammes (119 à 135) dans des intervalles de temps associés respectivement aux télégrammes (119 à 135) et se répétant de façon cyclique selon une horloge fondamentale et dans lequel il est associé aux télégrammes (119 à 135) à chaque fois un premier identificateur (U) qui attribue au télégramme respectif un groupe de n intervalles de temps consécutifs pour la transmission du télégramme respectif, le groupe se répétant de façon cyclique,
**caractérisé par le fait qu'**il est associé aux télégrammes (119 à 135) à chaque fois un deuxième identificateur (Z) qui attribue au télégramme respectif un m-ème intervalle de temps dans la séquence des n intervalles de temps d'un groupe pour la transmission du télégramme respectif, avec 1 ≤ m ≤ n.
